# EUROPÄISCHE PATENTANMELDUNG

(11) **EP 1 313 160 A1**
(43) Veröffentlichungstag der Anmeldung: **21.05.2003**
(21) Anmeldenummer: 01126949.5
(22) Anmeldetag: 13.11.2001
(51) Int. Cl.: H01M 8/04

(54) **Vorrichtung zur Brennstoffversorgung von Brennstoffzellen**

(71) Anmelder: SFC Smart Fuel Cell AG, 85649 Brunnthal-Nord (DE)
(72) Erfinder: DEINZER, Klaus, 8952 Schlieren (CH); RENSCH, Rafael, 7166 Trun (CH); REBSAMEN, Christoph, 8006 Zürich (CH); KOLL, Andreas, 8049 Zürich (CH)
(74) Vertreter: Grünecker, Kinkeldey, Stockmair & Schwanhäusser Anwaltssozietät

(57) **Zusammenfassung**

Die vorliegende Erfindung betrifft eine Brennstoffpatrone zum Versorgen einer Brennstoffzellenvorrichtung, mit einer Auslasseinrichtung, die derart ausgebildet ist, dass sie durch eine Öffnungseinrichtung einer der Brennstoffpatrone entsprechenden Patronenaufnahmevorrichtung geöffnet werden kann. Weiterhin betrifft die Erfindung eine Patronenaufnahmevorrichtung für eine derartige Brennstoffpatrone, welche Führungs- und Halterungseinrichtungen zur Führung und Halterung der Brennstoffpatrone, Öffnungseinrichtungen zum Öffnen der Brennstoffpatrone, und Brennstoffentnahmeeinrichtungen zur Brennstoffentnahme aus der Brennstoffpatrone umfasst. Außerdem betrifft die Erfindung eine Brennstoffzellenvorrichtung mit einer derartigen Patronenaufnahmevorrichtung.

## Beschreibung

Die vorliegende Erfindung betrifft Vorrichtungen zur Versorgung von Brennstoffzellensystemen mit Brennstoff. Insbesondere betrifft die Erfindung Brennstoffpatronen für Brennstoffzellensysteme und Vorrichtungen, um eine sichere und steuerbare Zufuhr von Brennstoff aus den Brennstoffpatronen in die Brennstoffzellensysteme zu gewährleisten.

### Stand der Technik

Auch in solchen Anwendungsbereichen, in denen die Brennstoffzelle deutliche Vorteile gegenüber Batterien oder wiederaufladbaren Akkumulatoren hat, werden vielfältig die klassischen Verfahren der netzunabhängigen Stromversorgung gegenüber der Brennstoffzelle bevorzugt. Die Gründe liegen häufig nicht etwa darin, dass die entsprechende Technik vorteilhafter oder ausgereifter wäre, sondern darin, dass verbrauchte Batterien leicht durch unverbrauchte Batterien ersetzbar sind, entleere Akkumulatoren leicht wiederaufladbar sind, und darüber hinaus in vielen Anwendungen wahlweise Akkumulatoren und/oder Batterien verwendbar sind.

Die (kontinuierliche) Stromversorgung mit einer Brennstoffzelle erfordert eine (kontinuierliche) Versorgung der Brennstoffzelle mit Brennstoff. Dabei ist es üblich, diese Brennstoffzufuhr unter Berücksichtigung individueller Gesichtspunkte zu realisieren, was einerseits vergleichsweise aufwendig und ineffektiv ist, und andererseits zur Folge hat, dass die verschiedenen Lösungsansätze für verschiedene Anwendungen häufig inkompatibel zueinander sind. Im Bereich der sogenannten Consumer-Elektronik verwendete Brennstoffzellenvorrichtungen umfassen i.d.R. einen integrierten Brennstofftank mit einem Brennstoffvorrat, der für einen Betrieb von bis zu mehreren Stunden ausreicht. Ist der Vorrat aufgebraucht, so muss der Brennstofftank wieder befüllt werden, was relativ aufwendig ist: Meist muss dabei der Betrieb der Brennstoffzelle unterbrochen werden und es müssen strenge Sicherheitsbestimmungen eingehalten werden.

Es ist somit eine Aufgabe der Erfindung, diese bei der Stromversorgung mit Brennstoffzellen bestehenden Nachteile zu beseitigen und insbesondere, die Brennstoffversorgung von Brennstoffzellen zu verbessern.

### Beschreibung der Erfindung

Zur Lösung dieser Aufgabe werden eine Brennstoffpatrone und eine Patronenaufnahmerichtung für die Brennstoffpatrone bereitgestellt. Ferner stellt die Erfindung Einrichtungen zur Dosierung des Brennstoffflusses aus einer in die Patronenaufnahmerichtung eingesetzten Brennstoffpatrone bereit.

Gemäß einem ersten Aspekt der vorliegenden Erfindung wird eine Brennstoffpatrone zum Versorgen einer Brennstoffzellenvorrichtung bereitgestellt, welche eine Auslasseinrichtung aufweist, die derart ausgebildet ist, dass sie durch eine Öffnungseinrichtung einer der Brennstoffpatrone entsprechenden Patronenaufnahmevorrichtung geöffnet werden kann.

Gemäß einem zweiten Aspekt der vorliegenden Erfindung wird eine Patronenaufnahmevorrichtung für eine derartige Brennstoffpatrone bereitgestellt, welche Führungs- und Halterungseinrichtungen zur Führung/Halterung der Brennstoffpatrone, Öffnungseinrichtungen zum Öffnen der Brennstoffpatrone, und Brennstoffentnahmeeinrichtungen zur Brennstoffentnahme aus der Brennstoffpatrone aufweist.

Die erfindungsgemäße Brennstoffpatrone kann sowohl zum Nachfüllen eines Brennstofftanks einer Brennstoffzellenvorrichtung, als auch direkt als Tankkartusche zum Betreiben einer Brennstoffzellenvorrichtung verwendet werden. Der Austausch einer leeren Brennstoffpatrone durch eine volle Brennstoffpatrone erfordert nur wenige Handgriffe und kann ähnlich schnell wie ein Batteriewechsel durchgeführt werden. Die Auslasseinrichtung der Brennstoffpatrone ist so ausgebildet, dass sie bei sachgerechter Verwendung nur in der entsprechenden Patronenaufnahmevorrichtung geöffnet werden kann. Die Schnittstelle Auslasseinrichtung/Öffnungseinrichtung zwischen Patrone und Patronenaufnahmevorrichtung ist fluiddicht ausgebildet, so dass Gefährdungen durch versehentlich austretenden Brennstoff im Großen und Ganzen ausgeschlossen werden können.

In einer bevorzugten Weiterbildung umfasst die Brennstoffpatrone und/oder die Patronenaufnahmevorrichtung eine Einrichtung, um den Brennstoff in einer Brennstoffkammer der Brennstoffpatrone mit Druck zu beaufschlagen.

In diesem Fall strömt der Brennstoff durch die geöffnete Auslassöffnung, ohne dass ein aktives Abpumpen des Brennstoffes durch eine in der Brennstoffleitung zur Brennstoffzelle einzubringende Pumpe erforderlich wäre. Dadurch ist eine kleinere Dimensionierung des Gesamtsystems möglich.

In vorteilhaften Weiterbildungen der Brennstoffpatrone und/oder der Patronenaufnahmevorrichtung umfassen die Einrichtungen zur Druckbeaufschlagung ein Gas.

So kann der Brennstoff in der Brennstoffpatrone durch ein innerhalb der Patrone vorgesehenes Druckgas mit Druck beaufschlagt sein. In diesem Falle steht eine einbaufertige gefüllte Brennstoffpatrone unter Druck. Alternativ können drucklose Brennstoffpatronen bereitgestellt werden, in denen der Brennstoff erst nach dem Einbau in die Patronenaufnahmevorrichtung mit Druck beaufschlagt wird. In bestimmten Anwendungsgebieten können diese drucklosen Brennstoffpatronen aus Sicherheitsgründen den unter Druck stehenden Patronen vorzuziehen sein. Die Druckbeaufschlagung des Brennstoffs kann in beiden Fällen durch Gaserzeugungszellen bewerkstelligt werden. Unter anderem können auch Druckgaspatronen auf CO₂ - Basis Verwendung finden.

In einer besonders bevorzugten Weiterbildung weist die Einrichtung zur Druckbeaufschlagung eine Druckfeder auf.

Druckfedern stellen ein einfaches, preisgünstiges und gegenüber äußeren Einflüssen (insbesondere Temperatur- und Druckschwankungen) wenig anfälliges Mittel zur Druckbeaufschlagung dar. Sie wirken auf wenigstens eine bewegliche oder dehnbare Wand eines Brennstoffreservoirs, oder auf einen sich in die Brennstoffkammer erstreckenden Kolben. Sie können sowohl innerhalb der Patrone vorgesehen sein, als auch als Bestandteil der Patronenaufnahmevorrichtung sein.

Insbesondere im Hinblick auf die Verwendung von drucklosen Brennstoffpatronen umfassen die Einrichtungen zur Druckbeaufschlagung vorzugsweise Einrichtungen, die es ermöglichen, den Brennstoff in der Brennstoffpatrone durch Anlegen einer äußeren Kraft mit Druck zu beaufschlagen.

Durch die Auslasseinrichtung der Brennstoffpatrone erfolgt die Brennstoffentnahme. Die Auslasseinrichtung kann beispielsweise eine Bohrung oder andere Aussparung im Patronengehäuse sein. Im einfachsten Fall wird die Auslasseinrichtung durch einen vorbestimmten Bereich des Patronengehäuses gebildet, der beim Öffnen der Patrone durchstoßen wird. Zur Erleichterung des Öffnungsvorgangs kann dieser Bereich entsprechend vorgeformt sein, etwa durch eine Vertiefung zur Führung der Öffnungseinrichtung.

In den meisten Weiterbildungen ist die Auslasseinrichtung allein für ein erneutes Verschließen der einmal geöffneten Patrone wenig geeignet, so dass diese in vorteilhaften Weiterbildungen eine die Auslasseinrichtung der Patrone verschließende Verschlusseinrichtung aufweist, die ein wiederholtes Öffnen und Verschließen der Brennstoffpatrone ermöglicht. Vorzugsweise umfasst diese Verschlusseinrichtung ein Rückschlagventil.

Eine solche Verschlusseinrichtung erleichtert die sichere Handhabung von bereits geöffneten Brennstoffpatronen, und ermöglicht, dass teilentleerte Patronen gefahrlos aus der Patronenaufnahmeinrichtung entnehmbar sind, etwa um sie gegen volle Patronen auszutauschen.

Besonders vorteilhaft im Hinblick auf den letztgenannten Aspekt - aber auch in anderen Weiterbildungen durchaus von Vorteil - kann bei den erfindungsgemäßen Brennstoffpatronen eine Füllstandsanzeige vorgesehen sein, die den Brennstofffüllstand der Patrone anzeigt.

Dies erlaubt eine einfache Kontrolle des Verbrauches und damit ein schnelles Erkennen von Betriebsbedingungen, insbesondere von Abweichungen von den idealen Betriebsbedingungen, und eine rechtzeitige Vorsorge von Nachschub.

In einer besonders bevorzugten Weiterbildung der Erfindung umfassen/umfasst die Brennstoffpatrone und/oder die Patronenaufnahmevorrichtung eine Dosiereinrichtung, um den Brennstofffluss aus der Patrone zu steuern.

Dadurch kann der Brennstofffluss leicht an geänderte Anforderungen, bspw. aufgrund von variablen Betriebsbedingungen, angepasst werden. Insbesondere können mehrere Dosiereinrichtungen verwendet werden, die für Grob- und Feindosierung ausgelegt sind.

In einer vorteilhaften Weiterbildung umfasst die Dosiereinrichtung eine Pumpeneinrichtung, da hierdurch die Dosierung direkt und aktiv über Förderrate der Pumpeneinrichtung gesteuert werden kann.

Besonders für kompakte und miniaturisierte Anwendungen von Brennstoffzellen sind Mikropumpen bevorzugte Ausbildungen von Pumpeneinrichtungen: sie sind einfach ansteuerbar, präzise, preiswert, und haben einen extrem geringen Platzbedarf, so dass sie nahezu überall eingebaut werden können.

In einer vorteilhaften Weiterbildung umfasst die Dosiereinrichtung wenigstens ein betätigbares Ventil.

Insbesondere bei solchen Kombinationen von Patrone und Patronenaufnahmevorrichtung, bei denen die Brennstoffförderung durch einen Überdruck bewirkt wird, stellen derartige Ventile eine einfache und präzise Möglichkeit zur Steuerung des Brennstoffflusses dar.

Vorzugsweise ist das wenigstens eine Ventil magnetisch oder piezoelektrisch betätigbar, da dies eine schnelle Aktivierung ermöglicht, dabei aber hochpräzise und mechanisch wenig aufwendig ist.

Je nach Größenordnung der erwünschten Durchflussmengen, der Brennstoffeigenschaften wie Viskosität, und anderer fluidmechanischer oder steuerspezifischer Gesichtspunkte kann das wenigstens eine Ventil ein Nadelventil und/oder ein Tellerventil und/oder ein Schiebeventil sein.

Die beschriebenen Patronen eignen sich gut für einen sicheren Transport und eine sichere Lagerung von Brennstoff, sowie für eine sichere Entnahme von Brennstoff durch entsprechend ausgebildete Patronenaufnahmeeinrichtungen. Somit können die erfindungsgemäßen Brennstoffpatronen vorteilhaft direkt als Nachfüllkartuschen und/oder als Tankkartuschen in Brennstoffzellenvorrichtungen eingesetzt werden, wenn diese mit einer solchen Patronenaufnahmeeinrichtung ausgestattet sind.

Im ersten Fall erlauben sie, den Brennstofftank einer Brennstoffzellenvorrichtung auf einfache und sichere Weise aufzufüllen.

Im zweiten und besonders bevorzugten Fall, nämlich bei der Verwendung als Tankkartusche, besteht die Möglichkeit, kompakte Ausführungsformen von Brennstoffzellenvorrichtungen zu konzipieren, bei denen die Brennstoffpatrone die Brennstoffzellenvorrichtung während des Betriebs kontinuierlich mit Brennstoff versorgt.

Im Hinblick auf das Gefahrpotenzial von für Brennstoffzellen verwendeten Brennstoffen werden Weiterbildungen der erfindungsgemäßen Brennstoffpatrone bevorzugt, die ein mehrmaliges Verwenden einer Brennstoffpatrone entweder ganz ausschließen oder erschweren und von einer Sicherheitsüberprüfung durch qualifiziertes Personal abhängig machen. Hierzu weist die Patrone eine Sicherheitseinrichtung auf, die beim Einsetzvorgang in die Patronenaufnahmevorrichtung und/oder beim Entnahmevorgang aus der Patronenaufnahmevorrichtung beschädigt wird. Dabei kann die Beschädigung reversibel oder irreversibel sein; eine Reparatur oder ein Austausch beschädigter Teile sollte aber - wenn überhaupt - nur durch qualifiziertes Fachpersonal möglich sein bzw. für dafür nicht speziell autorisierte Personen mit einem unverhältnismäßig großem Aufwand verbunden sein.

Die Sicherheitseinrichtung kann derart ausgebildet sein, dass die Beschädigung ein Wiederbefüllen der Patrone gänzlich unmöglich macht. Ähnlich wie bei Campinggaskartuschen kann dies beispielsweise durch eine beim Einsetzvorgang durchzuführende Perforation im Auslassbereich der Patrone erreicht werden, so dass nur noch die Kombination Patronenaufnahmevorrichtung inklusive eingesetzter Patrone nach außen dicht ist, nicht aber die Patrone allein.

Alternativ kann die Sicherheitseinrichtung Elemente aufweisen die beim Einführen und/oder Entnehmen der Patrone abgebrochen oder so beschädigt, beispielsweise verbogen, werden, dass sie ein erneutes Einsetzen der Patrone in eine Patronenaufnahmevorrichtung und/oder ein Wiederbefüllen der Patrone von einem Austausch der beschädigten Elemente durch unbeschädigte Elemente abhängig machen. Zweckmäßigerweise werden diese Elemente so komplex gestaltet, dass sie für einen Laien nicht oder nur unter unverhältnismäßig hohem Aufwand nachzubilden oder zu reparieren sind. Weitere Sicherheit kann dadurch gewonnen werden, dass der Austauschvorgang eine speziell dafür vorgesehene Vorrichtung erfordert.

Die erfindungsgemäße Patronenaufnahmevorrichtung weist in besonders vorteilhaften Weiterbildungen Halterungseinrichtungen (wie Einrastelemente, Druckfedern, etc.) und/oder Führungseinrichtungen (wie Führungsschienen, Zentrierelemente, etc) auf, die alle dazu beitragen und sicherstellen, dass die Schnittstelle zwischen Auslasseinrichtung der Patronen und Öffnungseinrichtung der Patronenaufnahmevorrichtung auf zuverlässige und reproduzierbare Weise dichtend ausgebildet wird.

Gemäß einem weiteren Aspekt der vorliegenden Erfindung wird eine Brennstoffzellenvorrichtung mit wenigstens einer wie oben beschriebenen Patronenaufnahmevorrichtung bereitgestellt.

Solche Brennstoffzellenvorrichtungen können unmittelbar mit den erfindungsgemäßen Patronen betrieben werden, ohne die Notwendigkeit von Konstruktionsänderungen besteht. Bei zwei (oder mehreren) Patronenaufnahmevorrichtungen ist es entsprechend möglich, parallel zwei (oder mehrere) Brennstoffpatronen einzusetzen, die vorzugsweise nacheinander entleert werden, so dass der Betrieb der Brennstoffzellenvorrichtung während des Austausches einer Brennstoffpatrone aufrecht erhalten werden kann.

Zur weiteren Erläuterung werden im Folgenden bevorzugte Ausführungsformen der vorliegenden Erfindung unter Bezugnahme auf die beigefügten Figuren beschrieben. Dabei zeigen:
- Fig. 1:: in schematischer Ansicht eine erfindungsgemäße Brennstoffpatrone, eine erfindungsgemäße Patronenaufnahmevorrichtung, sowie die gemeinsame Verwendung der beiden
- Fig. 2:: die Verwendung eine Dosiereinrichtung mit den erfindungsgemäßen Vorrichtungen von Fig. 1
- Fig. 3:: ein erstes Ausführungsbeispiel für eine Brennstoffpatrone gemäß der vorliegenden Erfindung
- Fig. 4:: ein zweites Ausführungsbeispiel für eine erfindungsgemäße Brennstoffpatrone
- Fig. 5:: ein drittes Ausführungsbeispiel für eine erfindungsgemäße Brennstoffpatrone
- Fig. 6:: ein viertes Ausführungsbeispiel für eine erfindungsgemäße Brennstoffpatrone
- Fig. 7:: ein fünftes Ausführungsbeispiel für eine erfindungsgemäße Brennstoffpatrone
- Fig. 8:: ein sechstes Ausführungsbeispiel für eine erfindungsgemäße Brennstoffpatrone
- Fig. 9:: ein erstes Ausführungsbeispiel für die Ausbildung einer Schnittstelle zwischen einer erfindungsgemäßen Patrone und einer erfindungsgemäßen Patronenaufnahmevorrichtung
- Fig. 10:: ein zweites Ausführungsbeispiel für die Ausbildung einer derartigen Schnittstelle
- Fig. 11:: ein drittes Ausführungsbeispiel für die Ausbildung einer derartigen Schnittstelle
- Fig. 12:: ein erstes bevorzugtes Ausführungsbeispiel einer Dosiereinrichtung
- Fig. 13:: ein zweites bevorzugtes Ausführungsbeispiel einer Dosiereinrichtung
- Fig. 14:: ein Gehäuse mit Fächern für Vorrichtungen zum Betreiben eines Brennstoffzellensystems, inklusive eines Patronenfachs
- Fig. 15:: eine in das Gehäuse von Fig. 14 eingesetzte Brennstoffpatrone.

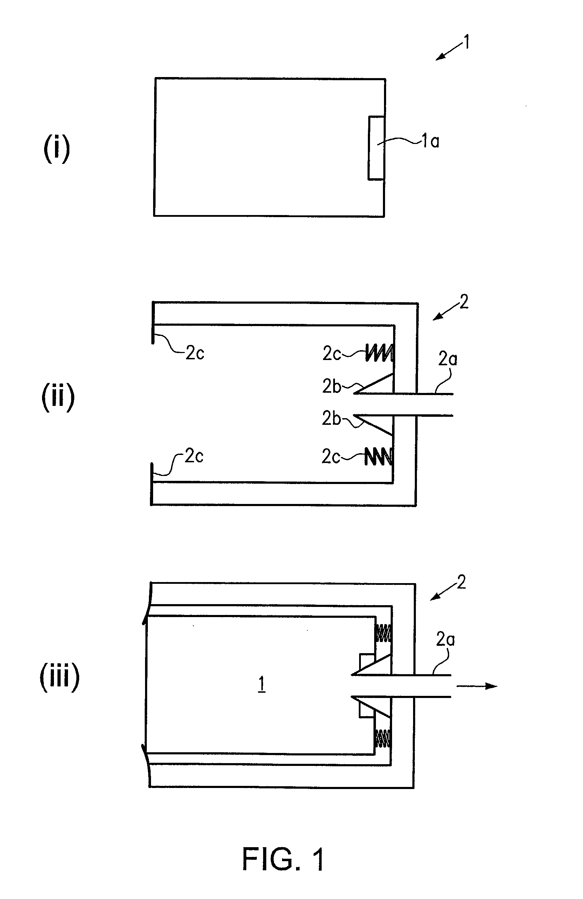

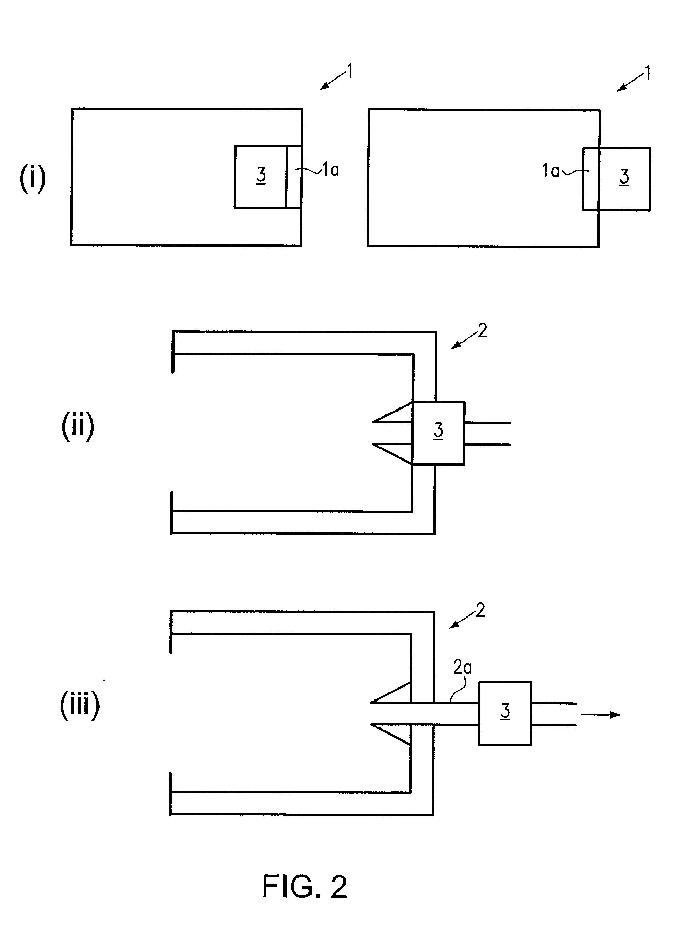

Die stark schematisierten Figuren 1 und 2 dienen zur Veranschaulichung einiger grundlegender Prinzipien der vorliegenden Erfindung.

Fig. 1(i) zeigt eine Brennstoffpatrone 1 mit einen Auslassbereich 1a, über den die Entnahme von Brennstoff aus der Patrone 1 erfolgt.

Fig. 1(ii) zeigt eine Patronenaufnahmeeinrichtung 2 für die in Fig. 1(i) skizzierte Brennstoffpatrone 1.

Die Aufnahmeeinrichtung 2 weist Halterungseinrichtungen 2c auf, die der sicheren und stabilen Positionierung einer in die Aufnahmeeinrichtung 2 eingeführten Brennstoffpatrone 1 dienen. Einfache, aber dennoch zuverlässige Ausführungen solcher Halterungseinrichtungen 2c umfassen beispielsweise gefederte Rückhaltehaken und Spiralfedern.

Ferner weist die Aufnahmeeinrichtung 2 eine Verbindungseinrichtung 2b, die dazu dient, eine gegenüber der Umgebung insbesondere in Bezug auf den verwendeten Brennstoff fluiddichte Verbindung zwischen dem Auslass 1a der Patrone 1 und einer von der Aufnahmeeinrichtung 2 wegführenden Brennstoffentnahmeeinrichtung 2a (beispielweise eine Rohrleitung) herzustellen. Die Verbindungseinrichtung 2b kann z.B. eine Kupplungseinrichtung mit einem an den Auslassbereich der Patrone angepassten Flansch (inklusive Dichtungen) umfassen. In besonders bevorzugten Ausführungsformen dient diese Verbindungseinrichtung 2b auch dem Öffnen der Brennstoffpatrone. Ein einfaches Beispiel dafür ist eine Hohlnadel, die den Auslassbereich 1a der Patrone 1 beim Einschieben oder Arretieren der Patrone 1 in die Aufnahmeeinrichtung 2 durchstößt und dadurch eine Fluidverbindung zwischen dem Brennstoffreservoir in der Patrone 1 und der von der Aufnahmeeinrichtung 2 wegführenden Brennstoffleitung 2a herstellt.

Vorzugsweise weisen sowohl Patronenaufnahmeeinrichtung 2 als auch Brennstoffpatrone 1 aufeinander abgestimmte Führungseinrichtungen und Zentriereinrichtungen (nicht abgebildet) auf, die dem Einführen und der präzisen Positionierung der Brennstoffpatrone 1 in der Aufnahmeeinrichtung 2 dienen. Falls die Patrone eine Sicherheitseinrichtung aufweist, die beim Einsetzvorgang in die Patronenaufnahmevorrichtung und/oder beim Entnahmevorgang aus der Patronenaufnahmevorrichtung beschädigt werden soll, so können - in Abhängigkeit von der Ausbildung dieser Sicherheitseinrichtung - zu diesem Zwecke in der Patronenaufnahmeeinrichtung 2 spezielle Einrichtungen vorgesehen sein, die diese Beschädigung bewirken. Alternativ kann diese Beschädigung aber auch über die oben erwähnten Führungseinrichtungen und Zentriereinrichtungen oder Standardeinrichtungen wie der Öffnungseinrichtung 2b erzielt werden.

Fig. 1(iii) zeigt die Patronenaufnahmeeinrichtung 2 von Fig. 1(ii) zusammen mit einer eingesetzten Brennstoffpatrone 1 von Fig. 1(i). In dem in Fig. 1(iii) gezeigten Zustand kann Brennstoff aus der Brennstoffpatrone 1 über die Brennstoffleitung 2a entnommen werden.

Für einen geregelten Betrieb eines Brennstoffzellensystems ist eine präzise Dosierung des zugeführten Brennstoffflusses erforderlich.

Ausgehend von Fig. 1 (iii) kann eine solche Dosierung so wie in Fig. 2(iii) veranschaulicht erfolgen:

Gemäß Fig. 2(iii) durchläuft der über die Brennstoffleitung 2a aus einer Brennstoffpatrone entnommene Brennstoff eine Dosiereinrichtung 3, die den dem Brennstoffzellensystem zugeleiteten Brennstofffluss regelt.

Alternative Anordnungsmöglichkeiten für eine Dosiereinrichtung 3 sind in den Figuren 2(i) und 2(ii) skizziert:

Fig. 2(i) zeigt eine Brennstoffpatrone 1 mit integrierter Dosiereinrichtung 3. Hierzu bestehen die folgenden Möglichkeiten: a) die Dosiereinrichtung 3 ist vollständig innerhalb des Gehäuses der Brennstoffpatrone 1 vorgesehen, also noch vor dem eigentlichen Auslass 1a (linkes Teilbild); b) die Dosiereinrichtung 3 ist in die Auslasseinrichtung 1a der Brennstoffpatrone 1 integriert oder direkt auf die Auslasseinrichtung 1a der Brennstoffpatrone 1 aufgesetzt (rechtes Teilbild). Für diese Ausführungen muss natürlich die Aufnahmevorrichtung entsprechend angepasst sein.

Bei den nachfolgenden Figuren werden für Merkmale mit gleicher oder äquivalenter Entsprechung dieselben oder um jeweils 100 erhöhte Bezugszeichen verwendet. Auf eine eingehende Besprechung funktioneller Eigenschaften derartiger strukturell und/oder funktionell vergleichbarer Merkmalen wird verzichtet, wenn dies lediglich zu einer Wiederholung von schon in Zusammenhang mit vorangegangenen Figuren ausführlich beschriebenen Sachverhalts führen würde.

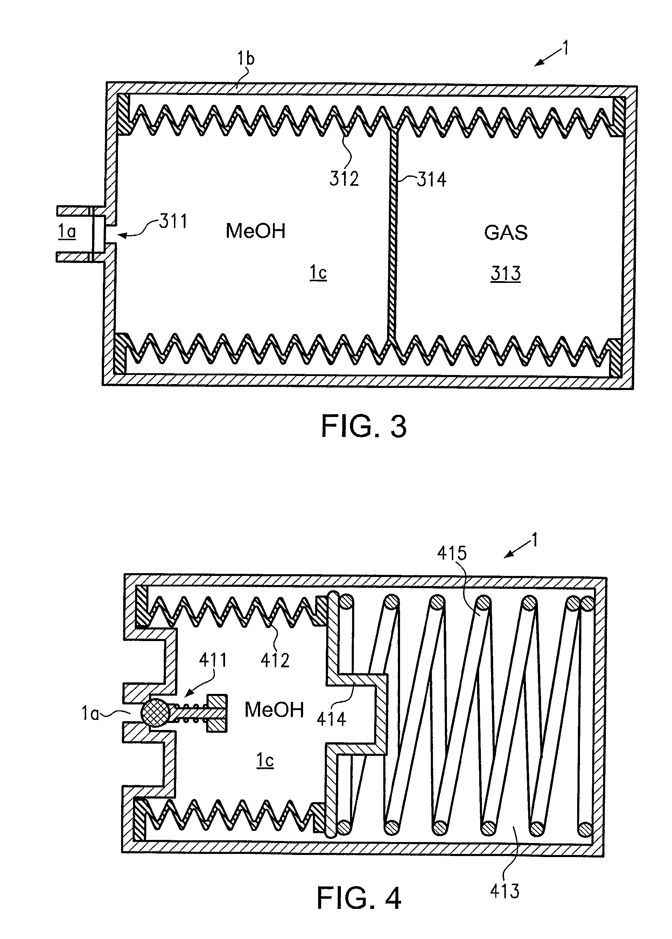

Fig. 3 zeigt ein erstes Ausführungsbeispiel für eine Brennstoffpatrone 1 gemäß der vorliegenden Erfindung.

Die Patrone 1 weist ein formstabiles Außengehäuse 1b auf, das an einem Ende eine Verschlusseinrichtung 311 aufweist, die den einen Auslass 1a verschließt. Innerhalb des Gehäuses 1b ist eine innere Hülle 312 vorgesehen, die parallel zur Längsachse des Gehäuses 1 b verläuft und fluiddicht (d.h. gas- und/oder flüssigkeitsdicht) mit der auslassseitigen Endinnenfläche und der Auslassseite gegenüberliegenden Endinnenfläche des Gehäuses verbunden ist. Im vorliegenden Fall ist die innere Hülle 312 als ein Faltenbalg (beispielsweise aus einem Elastomer) ausgebildet. Das Innere der Patrone 1 ist unterteilt in eine Brennstoffkammer 1c und eine zweite Kammer 313, die im vorliegenden Ausführungsbeispiel mit einem unter Druck gesetzten Gas gefüllt ist. Die Brennstoffkammer 1c ist durch eine sich senkrecht zur Patronenlängsachse erstreckende, mit dem Faltenbalg 312 verschweißte Trennwand 314 von der Gaskammer 313 getrennt ist. Der Faltenbalg 312 verhindert ebenfalls eine Vermischung von Druckgas und Brennstoff.

Da die Trennwand 314 nur durch den Elastomer gehalten wird, aber entlang der Längsrichtung des Gehäuses 1b frei beweglich ist, wird demzufolge auch der Brennstoff in der Brennstoffkammer 1c mit im wesentlichen demselben Druck wie das Gas beaufschlagt. Somit bewirkt ein Öffnen der Verschlusseinrichtung 311 zur Auslassöffnung 1a, dass Brennstoff durch diese aus der Patrone 1 gedrängt wird.

Bei dem gezeigten Ausführungsbeispiel weist das Gas in der Gaskammer 313 einen vorgegebenen Anfangsdruck auf, der sich mit dem Entleeren der Patrone verringert. Alternativ kann das die Gaskammer abschließende Ende des Gehäuses 1b mit einem Gasanschluss und einem Rückschlagventil versehen sein, um parallel zum Entleeren der Patrone 1 Gas nachzuliefern und so den Gasdruck in der Gaskammer auf einem konstanten oder variablen Wert einzustellen.

Die Art der für die Patrone 1 verwendeten Materialien hängt stark von den chemischen Eigenschaften des Brennstoffs, aber auch von den Einsatzbereichen der Brennstoffzelle ab. Ein Außengehäuse 1b aus Metall ist mechanisch und thermisch stabiler als ein Kunststoffgehäuse. Aufgrund der höheren Materialfestigkeit können höhere Innendrücke verwendet werden. Bei gleichen Außendimensionen kann ein größeres Innenvolumen erzielt werden. Demgegenüber haben Kunststoffe einen Gewichtsvorteil und sind formstabiler gegenüber moderaten äußeren Kräften.

Speziell bei Methanol als Brennstoff ist zu beachten, dass die meisten Kunststoffe im Gegensatz zu Metallen eine nichtvernachlässigbare, zum Teil sogar eine hohe Durchlässigkeit für Methanol aufweisen. Bei Verwendung des Brennstoffs Methanol werden daher die Außengehäuse 1b der beschriebenen Brennstoffpatronen 1 bevorzugt unter Verwendung von metallischen Werkstoffen hergestellt. In Betracht kommen sowohl Ganzmetallgehäuse, als auch der Einsatz von metallhaltigen Verbundwerkstoffen und/oder metallbeschichteten Materialien.

Fig. 4 zeigt ein weiteres Ausführungsbeispiel für eine Brennstoffpatrone gemäß der vorliegenden Erfindung. Der Fig. 3 entsprechende Teile werden nachfolgend nur insoweit beschrieben, als sie Unterschiede zu der in Fig. 3 gezeigten Ausführungsform aufweisen.

Die Patrone 1 weist auslassseitig eine Brennstoffkammer 1c auf, die vom übrigen Gehäuseinneren durch einen Faltenbalg 412 und eine Trennwand 414 isoliert ist, wobei letztere fest mit dem freien Ende des Faltenbalgs 412 verbunden ist. Das auslassseitige Ende des Faltenbalgs 412 ist wie beim Ausführungsbeispiel von Fig. 3 fest mit der Innenwand des Gehäuses 1b verbunden. Im Unterschied zu Fig. 3 erstreckt sich der Faltenbalg 412 hier nicht entlang der gesamten Längsrichtung des Gehäuses 451 und ist nur auslassseitig an der Innenseite des Gehäuses 1b fixiert.

Während bei der Ausführungsform von Fig. 3 ein unter Druck stehendes Gas die zum Verdrängen des Brennstoffes erforderliche Energie liefert, dient hierzu bei der Ausführungsform von Fig. 4 hierzu eine Spiralfeder 415, die im vorgespannten Zustand zwischen einem Gehäuseende und der Trennwand 414 vorgesehen ist.

Die Auslassöffnung 1a wird durch ein Rückschlagventil 411 verschlossen, dass durch eine externe, entlang der Auslassöffnung 1a einführbare Vorrichtung geöffnet werden kann. Um einen möglichst hohen Entleerungsgrad zu erreichen, weist die Trennwand 414 eine mittige, sich kolbenförmig in die Spiralfeder 415 erstreckende Ausbuchtung auf, durch die vermieden wird, dass die Trennwand 414 mit dem Rückschlagventil 411 in Berührung kommt.

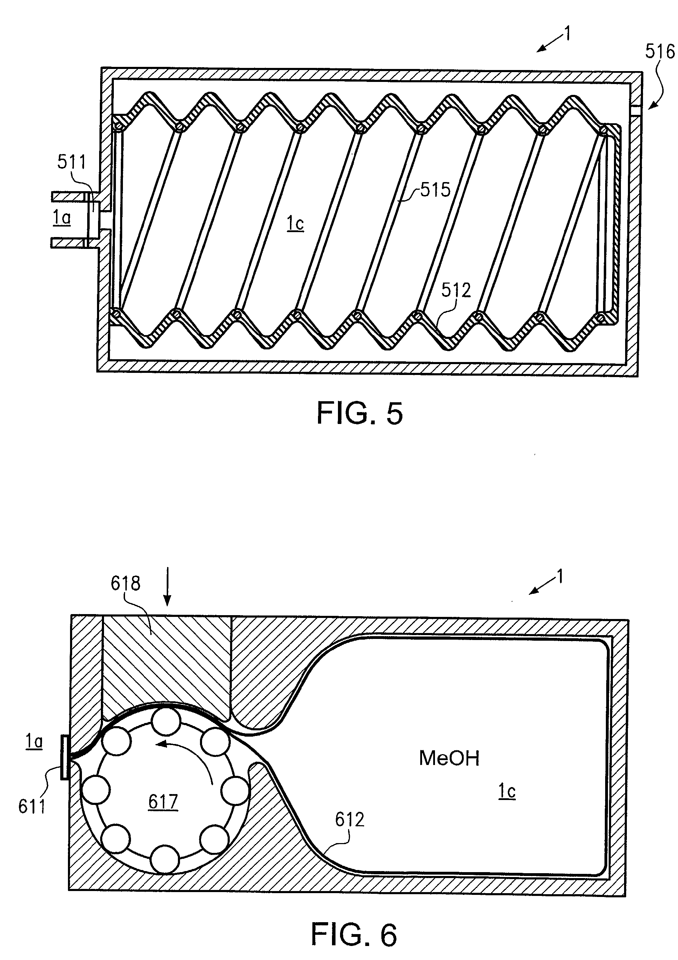

Ein weiteres Ausführungsbeispiel für eine Brennstoffpatrone gemäß der vorliegenden Erfindung ist in Fig. 5 skizziert:

Die Brennstoffpatrone 1 von Fig. 5 weist ähnlich wie die von Fig. 3 einen doppelten Mantel auf. Der äußere Mantel wird durch das Außengehäuse 1b gebildet wird und verleiht der Patrone mechanische Stabilität, während der innere Mantel 512 die eigentliche Brennstoffkammer 1c definiert.

Der innere Mantel 512 ist wiederum auslassseitig fest mit der Innenseite des Gehäuses 1b verbunden und auf dem gegenüberliegenden Gehäuseende frei entlang der Gehäuseachse beweglich. Die Brennstoffkammer 1c kann in Richtung des Auslasses 1a durch das Öffnen der Verschlusseinrichtung 511 entleert werden. Der innere Mantel 512 ist derart elastisch ausgebildet, dass er zum Zusammenziehen oder Zusammenfalten neigt. Diese Eigenschaft des inneren Mantels wird dadurch erreicht, dass er entweder vollständig aus einem elastischen Material gebildet wird, oder als Faltenbalg aus einem mehr oder weniger elastischen Hüllstoff in Verbindung mit einem Elastizität verleihenden Element. Im vorliegenden Beispiel ist eine unter Dehnung stehende Spiralfeder in den Faltenbalg eingespritzt. Dadurch wird auf den Brennstoff innerhalb der Brennstoffkammer 1c ein Druck ausgeübt, was bewirkt, dass beim Öffnen der Patrone 1 der Brennstoff durch die Auslassöffnung 1a gedrängt wird.

Da beim Entleeren der Patrone 1 das Volumen der Brennstoffkammer 1c abnimmt, muss vermieden werden, dass sich zwischen inneren und äußerem Mantel ein Vakuum bildet, das die vollständige Entleerung verhindern würde. Hierzu ist in der Wand der äußeren Hülle 1b ein Öffnung 516 vorgesehen, die den Druckausgleich mit der Umgebung ermöglicht. Um bei etwaiger Beschädigung des inneren Mantels 512 zu gewährleisten, dass durch die Öffnung 516 kein Brennstoff austreten kann, ist es zweckmäßig, diese Öffnung 516 mit einem (nicht abgebildeten) Rückschlagventil zu versehen. Dies ist vor allem auch dann erforderlich, wenn der Brennstoff gesundheitsschädliche oder chemisch aggressive Eigenschaften hat und durch die Kammerwand der Brennstoffkammer 515 diffundieren kann.

Die in den Figuren 3 bis 5 gezeigten Patronen sind entsprechen einem aktiven Typ, bei denen die zur Entleerung erforderliche *actio* durch Einrichtungen der Patrone 1 selbst aufgebracht wird, wobei in den abgebildeten Ausführungsbeispielen die *actio* durch Druckbeaufschlagung erzielt wird.

Fig. 6 zeigt eine "passive" Brennstoffpatrone 1, d.h. eine Patrone, bei der ein Öffnen der Verschlusseinrichtung 611 nicht ein automatisches Selbstentleeren der Patrone 1 bewirkt. Darüber hinaus stellt diese Brennstoffpatrone 1 ein Ausführungsbeispiel des im linken Teilbild von Fig. 2(i) skizzierten Typs dar, bei der wesentliche Bestandteile der Dosiereinrichtung 3 in die Brennstoffpatrone 1 integriert sind.

In die Patrone 1 ist ein peristaltisches Pumpenrad 617 integriert, das zwischen der eigentlichen Brennstoffkammer 1c und dem Auslass 1a vorgesehen ist. Die Entleerung erfolgt durch Drehen des Pumpenrades 617 und wird durch die auf die Brennstoffflüssigkeit wirkende Gravitation unterstützt. Daher ist die zweckmäßige Betriebsstellung der in der Fig. 6 gezeigten Patrone 1 die Vertikale mit dem Auslass 1a nach unten. Vorzugsweise ist der Motor zum Antreiben des Pumpenrades 617 nicht Bestandteil der Patrone 1, sondern in die Patronenaufnahmevorrichtung 2 für die Patrone 1 integriert.

Der Brennstoff selbst befindet sich innerhalb eines Beutels 612, der sich bis zum Auslass 1c der Patrone 1 erstreckt. Im peripheren Bereich des Pumpenrades 617 verjüngt sich der Beutel 612 zu einem Schlauch, wobei der Schlauchdurchmesser durch den bewegbaren Schieber 618 veränderbar ist.

Durch Drehen des Pumpenrades 660 entgegen dem Uhrzeigersinn werden sukzessive Flüssigkeitsmengen vorbestimmter Volumina aus der Brennstoffkammer 1c in den Schlauchbereich gedrängt und an der mit einer Dichtlippe 611 versehenen Auslassöffnung 1a nach außen abgegeben.

Die Dosierung des Brennstoffflusses, d.h. die Regelung des durch die Auslassöffnung 1a ausgegebenen Volumenstroms, kann beispielsweise direkt über die Steuerung der Rotationsgeschwindigkeit des Pumpenrades 617 erfolgen. In diesem Fall könnte der Schlauchdurchmesser auf einen vorbestimmten Wert festgelegt und auf den bewegbaren Schieber 618 verzichtet werden. Alternativ kann das Pumpenrad 617 mit einer im Idealfall konstanten Drehgeschwindigkeit angetrieben werden, wobei der Volumenstrom im wesentlichen durch Variation des Schlauchdurchmessers über ein Verschieben des Schiebers 618 gesteuert wird. Es ist aber auch möglich, dass die Verschiebung des Schiebers 618 einen nicht vernachlässigbaren Anpressdruck auf das Pumpenrad ausübt, der eine Reduzierung der Drehgeschwindigkeit des Pumpenrades 617 bewirkt. Dies muss bei der Steuerung der Dosierung des zu fördemden Volumenstroms berücksichtigt werden.

Die oben beschriebene Ausführungsform der Patrone 1 ist aufwendiger als die in den Figuren 3 bis 5 gezeigte. Sie hat aber den Vorteil, dass eine einfache Dosierung des Volumenstroms möglich ist und eine separate Dossiereinheit 3 nicht erforderlich ist. Ein weiterer, wegen der nicht-maßstabsgetreuen Abbildung nicht sofort ersichtlicher Vorteil ist, dass der weitaus größte Anteil des Innenvolumens zur Speicherung von Brennstoff genützt werden kann.

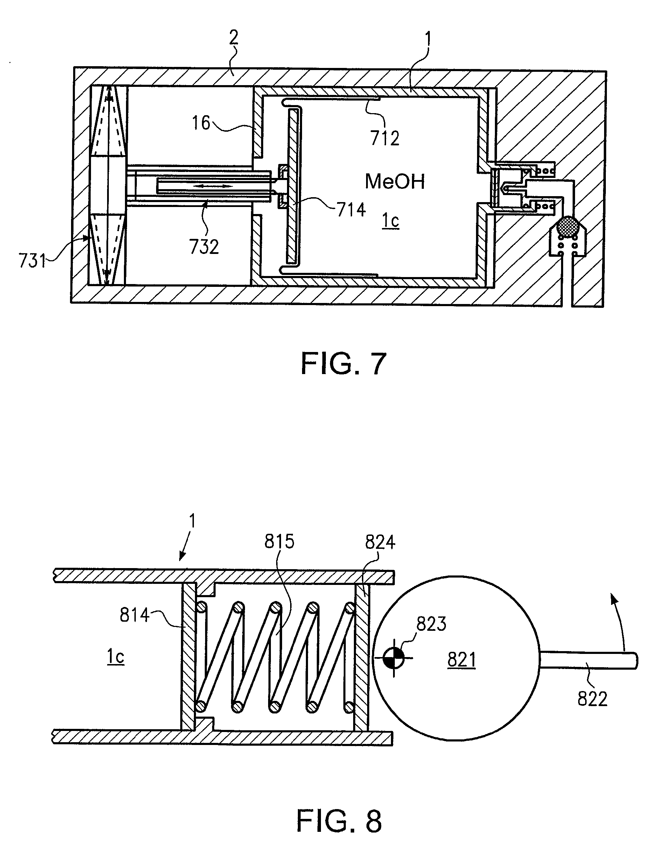

Eine weitere Ausführungsform einer passiven Brennstoffpatrone ist in Fig. 7 skizziert, welche zugleich ein Ausführungsbeispiel des in Fig. 2(ii) skizzierten Typs darstellt, bei der wesentliche Bestandteile der Dosiereinrichtung 3 in die Patronenaufnahmevorrichtung 2 integriert sind.

Die Brennstoffpatrone 1 von Fig. 7 ist in eine Patronenaufnahmevorrichtung 2 eingesetzt. Ähnlich wie die Patrone von Fig. 4 weist diese Patrone eine frei entlang der Patronenlängsachse bewegbare Kolbenfläche 714 auf, die zusammen mit einer an der Auslassinnenseite des Patronengehäuses befestigten Rollmembrane 712 die Brennstoffkammer 1c definiert. Im vollgefüllten Zustand befindet sich die Kolbenfläche 714 im Wesentlichen auf der dem Auslass gegenüberliegenden Gehäuseseite. Durch Ausüben einer in Richtung des Auslasses gerichteten Kraft auf die Kolbenfläche 714 wird ein zur Brennstoffentnahme erforderlicher Druck auf die in der Brennstoffkammer 1c vorgesehene Brennstoffflüssigkeit ausgeübt.

Im gezeigten Ausführungsbeispiel wird die Kraft auf die Kolbenaußenseite im Wesentlichen durch ein Tellerfederpaket 731 aufgebracht. Zur Steuerung der Kolbenverschiebung und damit der Dosierung des Brennstoffflusses aus der Brennstoffzelle 1 ist zwischen dem Tellerfederpaket 731 und der Kolbenfläche 714 eine Doppelspindel 732 vorgesehen, die durch einen nicht abgebildeten Schrittmotor angesteuert wird.

Fig. 8 zeigt relevante Teile einer weiteren Ausführungsform einer Brennstoffpatrone und einer entsprechenden Patronenaufnahmevorrichtung. Von der Patronenaufnahmevorrichtung ist nur diejenigen Merkmale skizziert, die der Druckbeaufschlagung der Patrone dienen.

Die Patrone 1 weist zwei bewegbare Kolben 814 und 815 auf, die durch eine mit den Kolben fest verbundene Spiralfeder 815 beabstandet sind. Die Achse der Spiralfeder ist im Wesentlichen mit der Gehäuseachse ausgerichtet.

Bei der freien Patrone und auch im abgebildeten Zustand ist die Spiralfeder 815 entspannt oder nur geringfügig vorgespannt, so dass der Brennstoff in der Brennstoffkammer 1c unter vernachlässigbaren Druck steht.

Die Aufnahmeeinrichtung für die Patrone 1 weist einen Exzenter 821 auf, der mittels eines Handgriffs 822 um den Drehpunkt 823 gedreht werden kann. Bei eingesetzter Patrone 1 und Betätigung des Handgriffs 822 wird bei der Drehung des Exzenters 821 die Kolbenfläche 824 in Richtung der Kolbenfläche 814 verschoben, wobei die Spiralfeder komprimiert wird, wodurch wiederum ein Druck auf den in der Brennstoffkammer 1c befindlichen Brennstoff ausgeübt wird.

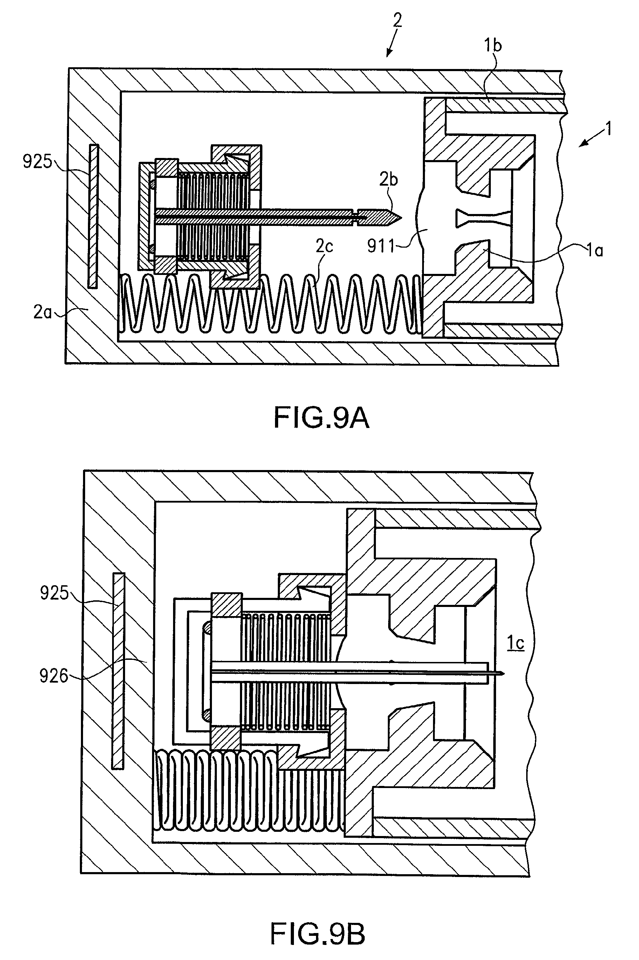

In den nachfolgenden Figuren 9 bis 12 werden verschiedene bevorzugte Ausführungsformen für die Realisierung einer der Brennstoffentnahme dienenden Schnittstelle zwischen Brennstoffpatrone 1 und den Brennstoffentnahmeeinrichtungen beschrieben (vgl. Fig. 1).

Ein prinzipielles Unterscheidungsmerkmal für im Umfang dieser Erfindung liegende Patronen ist die Art der Schnittstelle, über die das Entleeren der Patrone erfolgt:

Dabei kann die patronenseitigen Schnittstelle so ausgeführt sein, dass sie beim Einsetzvorgang irreversibel beschädigt wird, beispielsweise durch Perforation des Gehäuses (ähnlich wie bei im Campingbereich verwendeten Gaskartuschen).

Alternativ kann eine solche Schnittstelle - wie in Fig. 9A und 9B gezeigt - ein Septum 911 aufweisen, das beim Einsetzen durch die Nadelspitze 2b durchstoßen wird. Aufgrund der elastischen Eigenschaften des Septums schließt sich die Patrone nach einem Zurückziehen der Nadel wieder, so dass das Septum eine quasi-reversible Verschlusseinrichtung darstellt.

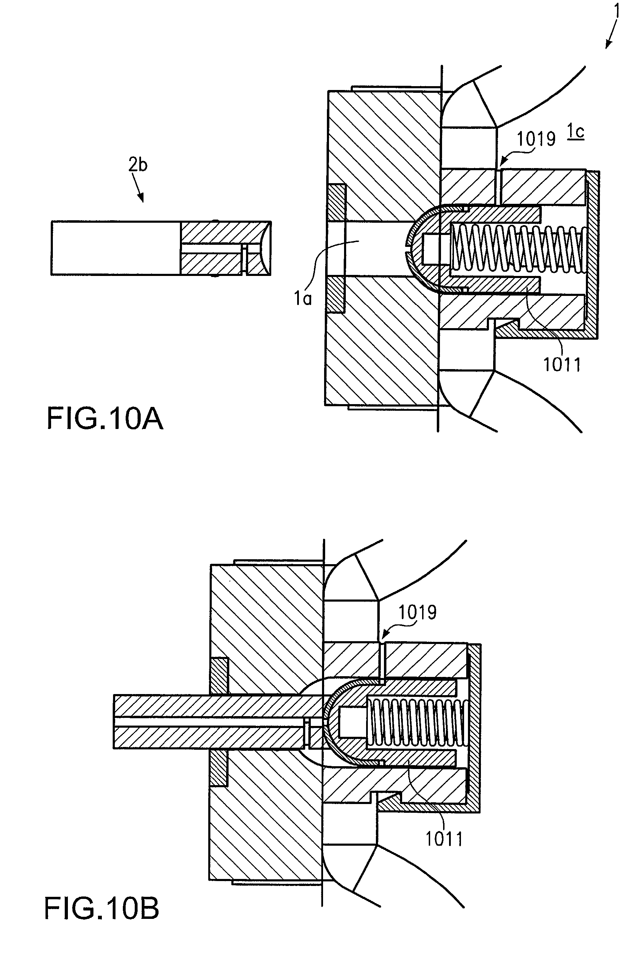

Die im Zusammenhang mit den Figuren 10 bis 12 beschriebenen Schnittstellen werden beim Entleerungsvorgang dagegen nicht beschädigt und sind daher für Mehrwegpatronen bevorzugt. Mit derartigen Patronen ist es auch leichter möglich, den Entleerungsvorgang zu unterbrechen und die Patrone aus der Patronenaufnahmevorrichtung zu entnehmen, wenn sie nur teilweise entleert wurde.

Die Figuren 9A und 9B zeigen ein erstes bevorzugtes Ausführungsbeispiel einer Schnittstelle.

Fig. 9A zeigt den Beginn des Einsetzvorgangs der Patrone 1 in die Patronenaufnahmeeinrichtung 2.

Der Auslassbereich 1a der Patrone 1 weist ein Septum 911 auf, das durch eine fest mit dem Gehäuse 1b verbundene Halterung gehalten wird. Innerhalb des Septums 911 ist zentral eine Aussparung zur besseren Führung einer das Septum durchstoßenden Hohlnadel 2b vorgesehen.

In der in Fig. 9B gezeigten Situation ist der Einsetzvorgang abgeschlossen. Hier hat die Hohlnadel 2b das Septum 911 durchstoßen und ist soweit in die Patrone 1 eingedrungen, dass die Nadelöffnung in den Brennstofftank 1c reicht, so dass eine Brennstoffentnahme über die Hohlnadel möglich ist.

Der über die Nadel 2b entnommene Brennstoff strömt aus dem der Patrone abgewandten Ende der Nadel 2b in die Brennstoffentnahmeeinrichtung 2a, die beispielsweise Filtereinrichtungen 925 und Zwischenspeicher 926 umfassen kann, von wo aus der Brennstoff über eine zwischengeschaltete Dosiereinheit 3 der Brennstoffzelleneinrichtung zugeführt werden kann (vergleiche Fig. 2).

Die in den in Figuren 9 gezeigte Patrone 1 zeichnet sich dadurch aus, dass das Septum 911, welches die Patrone im originalen Zustand verschließt, durch das Durchstoßen mit der Nadel 2b durchstoßen, d.h. irreversibel beschädigt wird, aber elastische Eigenschaften aufweist, so dass die Patrone 1 nach einem Zurückziehen der Nadel 2b wieder verschlossen wird. Demnach muss eine derart ausgebildete Patrone nach erfolgtem Einbau nicht zwangsweise vollständig entleert werden, sondern kann wegen dieser quasireversiblen Eigenschaften des Septums auch im teilentleerten Zustand ohne Sicherheitsbedenken entnommen werden.

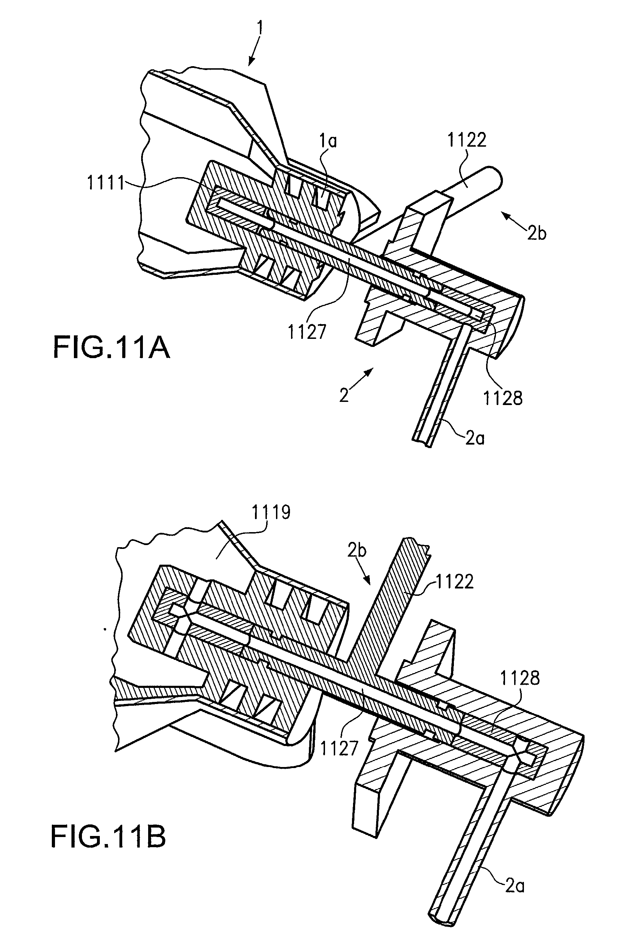

Demgegenüber zeigen die Figuren 10 und 11 eine Ausführungsformen von Patrone 1, die einen vollständig reversiblen Öffnungsmechanismus aufweisen und dadurch flexibler als die Patrone von Fig. 9 sind, gleichzeitig aber einen etwas aufwendigeren Aufbau besitzen.

Die Brennstoffpatrone 1 von Figur 10 weist am Patronenkopf eine Auslasseinrichtung 1a mit einer sich in das Innere der Patrone erstreckenden Längsbohrung auf. Senkrecht zur Längsbohrung ist ein mit der Brennstoffkammer kommunizierender seitlicher Brennstoffkanal 1019 vorgesehen. Auf Höhe dieses Kanals 1019 ist in der Längsbohrung eine mit einer Feder beaufschlagte Hülse 1011 vorgesehen, die den Seitenkanal 1019 versperrt. Die Hülse 1011 ist entgegen der Federkraft in Richtung des gegenüberliegenden Gehäuseendes so weit bewegbar, dass der Seitenkanal 1019 freigegeben wird, so dass Brennstoff aus der Brennstoffkammer 1c in den Längskanal strömen kann.

Figur 10B illustriert schematisch die zum Entleeren der Brennstoffpatrone verwendete Vorrichtung. Hierzu ist ein Kolben 2b vorgesehen, dessen Form und Dimensionierung an die den Auslassbereiches 1a der Brennstoffpatrone 1 angepasst sind. Wie die im Zusammenhang mit der in Figur 9 beschriebene Nadel ist dieser Kolben 2b innen hohl, wobei die im Kolben gebildete Kanüle zur Brennstoffentnahme dient. Beim Einschieben des Kolbens 2b in den Auslassbereich 1a der Brennstoffpatrone 1 kommt der Endbereich des Kolbens mit der Hülse 1011 in Berührung und bewirkt bei weiterem Einschieben, dass die Hülse 1011 gegen die Wirkung der Feder verschoben wird. Im gezeigten Zustand schließlich ist die Hülse 1011 so weit verschoben, dass die Kanüle des Kolbens in Fluidkommunikation mit der Brennstoffkammer 1c ist, so dass eine Brennstoffentnahme erfolgen kann.

Die Figuren 11A und 11B zeigen eine Schnittansicht des Auslassbereiches 1a einer Brennstoffpatrone 1, sowie die entsprechende Schnittansicht von Teilen der Brennstoffentnahmevorrichtungen.

In der Brennstoffpatrone 1 ist wie in der Patrone von Fig. 10 ein seitlicher Auslasskanal 1119 vorgesehen, der aber im Unterschied dazu nicht durch ein verschiebbares Teil (in Fig. 10: Hülse 1011), sondem durch ein drehbares Sperrteil 1111 verschlossen ist. Dieses Sperrteil 1111 weist einen Bohrung auf, welche durch Verdrehung des Sperrteils 1111 in Ausrichtung mit dem seitlichen Auslasskanal 1119 gebracht werden kann.

Zur Verdrehung des Sperrteils 1111 ist eine in die Längsbohrung des Auslasses 1a von außen aufsetzbare Verbindungseinrichtung 2b in Gestalt eines T-förmigen Schlüssels vorgesehen, der mit dem Sperrteil in Eingriff bringbar ist. Das dem Querbalken des "T" entsprechendende Element des Schlüssels 2b weist einen durchgehenden Kanal 1127 auf. Der vertikale Balken des "T" stellt einen Handgriff 1122 zur Drehung des Schlüssels 2b dar.

Ein Drehen des Schlüssels 2b durch Betätigung des Handgriffs 1122 bewirkt ein Drehen des Sperrteils 1111 und ein Öffnen der Patrone, sobald die Bohrung des Sperrteils 1111 und der Auslasskanal miteinander ausgerichtet sind.

Auf der der Brennstoffleitung 2a zugewandten Seite dieses T-Stückes kann zur Sicherung und als Rücklaufsperre ein weiteres Sperrteil 1128 vorgesehen sein, das simultan mit dem Sperrteil 1111 durch Drehen des Schlüssels 2b geöffnet wird.

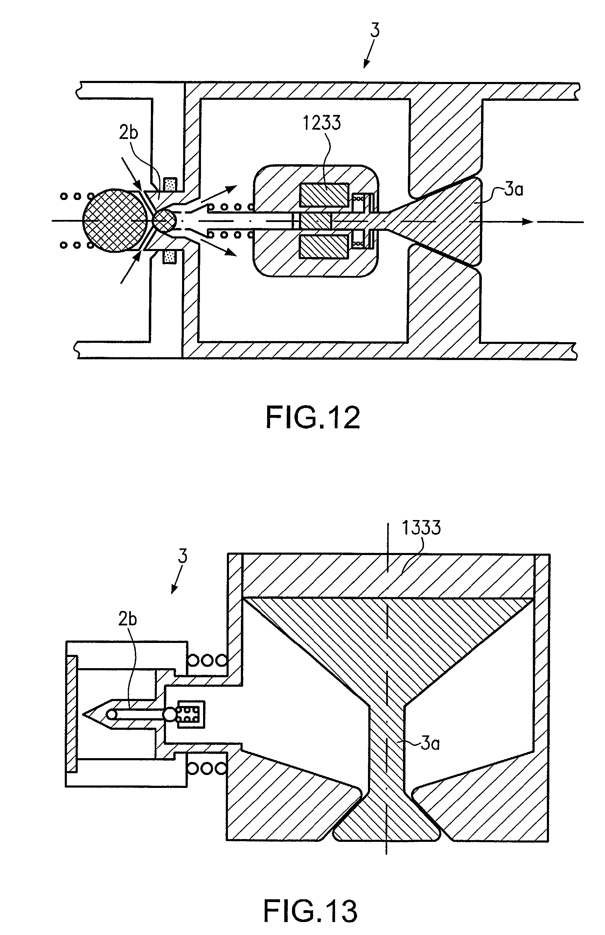

Die Figuren 12 und 13 zeigen zwei bevorzugte Ausführungsbeispiele von Dosiereinrichtungen 3 gemäß den Prinzipien der Figuren 2(ii, iii), die sich unmittelbar an die die Öffnung der Brennstoffpatrone bewirkende Verbindungseinrichtung 2b anschließen. Diese Dosiereinrichtungen 3 weisen ein Ventil 3a auf, das über ein Magnetspule 1233 (Fig. 12) bzw. über ein Piezoelement 1333 (Fig. 13) betätigbar ist. In den vorliegenden Beispielen ist das Ventil 3a als Tellerventil ausgebildet.

Anstelle des Tellerventils können alternativ Nadelventile, Membranventile, Schieberventile, etc. verwendet werden. Ferner kann die Dosierungsvorrichtung auch Pumpeneinrichtungen, insbesondere Mikropumpen, umfassen.

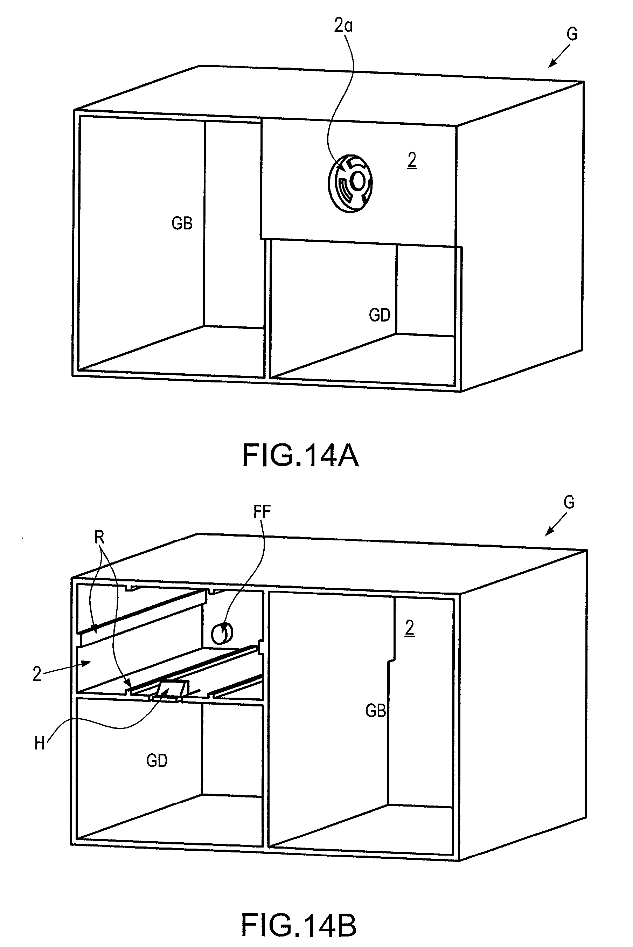

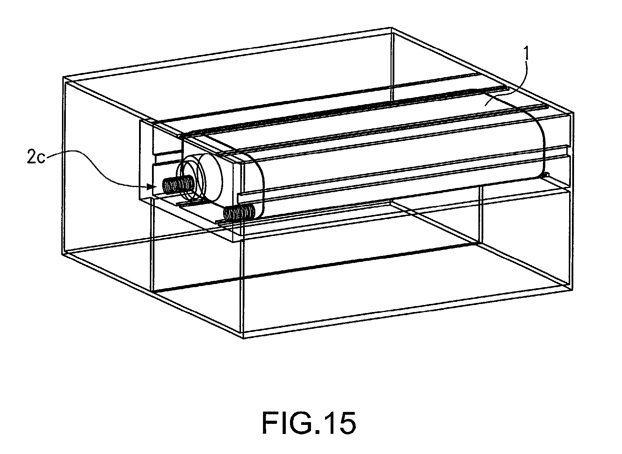

Die Figuren 14A, 14B und 15 zeigen schematisch eine aufeinander abgestimmte vorteilhafte Unterteilung eines Gehäuses G, das der Unterbringung von Vorrichtungen der vorliegenden Erfindung, die der Brennstoffversorgung einer Brennstoffzelle dienen, zusammen mit der Brennstoffzelle eingerichtet ist.

Dabei zeigen die Fig. 14A und 15B die Rück- bzw. Vorderansicht des leeren Gehäuses G, das in der bevorzugten Ausführungsform dreigeteilt ist, wobei Abteile für alle zum Betreiben einer Brennstoffzellenvorrichtung erforderlichen Vorrichtungen - inklusive der Brennstoffzellenvorrichtung selbst - innerhalb des Gehäuses untergebracht werden könne. Es bezeichnen die Bezugszeichen GB das Abteil zur Aufnahme der Brennstoffzellenvorrichtung, GD das Abteil zur Aufnahme einer Dosiereinrichtung, und 2 das Abteil zur Aufnahme einer Brennstoffpatrone. Der Einfachheit halber sind keine Einrichtungen wie Brennstoffleitungen, etc. eingezeichnet.

In Fig. 14A ist eine zylindrische Aussparung 2A mit einer Bohrung durch die Rückwand des Brennstoffpatronenfachs 2 eingezeichnet, wobei die Bohrung so angebacht ist, dass sie mit dem Auslass einer eingesetzten erfindungsgemäßen Brennstoffpatrone bzw. korrespondiert. Diese Aussparung kann beispielsweise auch als zwischen Brennstoffpatrone und Dosiereinheit geschalteter Zwischenspeicher dienen. Es versteht sich von selbst, dass die Dreiteilung nur beispielhaft ist und es keinerlei erfinderischer Tätigkeit bedarf, andere Aufteilungen anstelle der gezeigten zu verwenden.

Wie die Vorderansicht des Gehäuses G in Fig. 14B veranschaulicht, kann das Patronenfach 2 verschiedene Elemente aufweisen, die dem Einsetzen, der exakten Führung, und der Halterung der Brennstoffpatrone dienen:
- Führungsrippen R, die mit entsprechenden Vertiefungen in der Patronenaußenwand korrespondieren, gewährleisten eine präzise Führung der Patrone und minimieren seitliche Abweichungen (Spiel senkrecht zur Patronenlängsachse);
- durch die Federführungen FF aufgenommene Spiralfedem (die in Fig. 2 und in der nachfolgenden Fig. 15 skizziert sind) sorgen in Kombination mit einem Rasthaken H dafür, dass eine eingeführte Patrone zuverlässig und ohne Spiel entlang der Patronenlängsachse gehaltert wird.

FIG. 15 schließlich zeigt eine Skelettansicht des in den Figuren 14 skizzierten Gehäuses mit einer eingesetzten Brennstoffpatrone 1.

Die beiden Federn 2c können - je nach Zweckmäßigkeit - an der auslassseitigen Außenfläche der Brennstoffpatrone 1 oder - bevorzugt - auf den in Fig. 14B skizzierten Federführungen FF vorgesehen sein.

Bei der oben beschriebenen Ausführungsform war kein separater Brennstofftank vorgesehen. In diesen Fällen dient die Brennstoffpatrone direkt als Tankkartusche, die beim Betreiben der Brennstoffzelle allmählich entleert wird.

Alternativ kann die Brennstoffpatrone als Nachfüllkartusche fungieren, die im wesentlichen in einem Zug entleert wird, um einen separaten Brennstofftank zu befüllen. Da in diesem Fall für die Entleerung des Patrone keine feine Dosierung des Brennstoffflusses erforderlich ist, können Brennstoffpatronen für derartige Anwendungen i.d.R. einfacher aufgebaut sein als die oben beschriebenen Tankkartuschen. Ein weiterer Vorteil einer derartigen Ausführung besteht darin, dass die Brennstoffzellenvorrichtung ohne Unterbrechung betrieben werden kann, da ein Austauschen der Brennstoffpatrone nicht mit einer Unterbrechung der Brennstoffversorgung verbunden ist.

Im Fall der Verwendung als Tankkartusche ist ein unterbrechungsfreies Betreiben der Brennstoffzellenvorrichtung möglich, wenn ein Zwischenspeicher vorgesehen ist, der eine ausreichende Brennstoffreserve beinhaltet, um die Brennstoffzellenvorrichtung für die zum Auswechseln der Tankkartusche erforderliche Zeitdauer weiterzubetreiben. Dieser Zwischenspeicher ist vorzugsweise in die Aufnahmeinrichtung für die Brennstoffpatrone integriert. Alternativ ist ein unterbrechungsfreies Betreiben der Brennstoffzellenvorrichtung auch ohne einen derartigen Zwischenspeicher möglich, wenn die Brennstoffzellenvorrichtung so ausgebildet ist, dass wenigstens zwei Brennstoffpatronen parallel angeschlossen werden können.

## Patentansprüche

1. Brennstoffpatrone (1) zum Versorgen einer Brennstoffzellenvorrichtung, mit einer Auslasseinrichtung (1a), die derart ausgebildet ist, dass sie durch eine Öffnungseinrichtung (2b) einer der Brennstoffpatrone (1) entsprechenden Patronenaufnahmevorrichtung (2) geöffnet werden kann.

2. Brennstoffpatrone (1) nach Anspruch 1, mit einer Einrichtung (313, 314; 413, 414, 415; 515; 714; 814, 815, 824), um den Brennstoff in einer Brennstoffkammer (1c) der Brennstoffpatrone (1) mit Druck zu beaufschlagen.

3. Brennstoffpatrone (1) nach Anspruch 2, in welcher die Einrichtung zur Druckbeaufschlagung ein Gas (313) umfasst.

4. Brennstoffpatrone (1) nach Anspruch 2, in welcher die Einrichtung zur Druckbeaufschlagung eine Druckfeder (415; 515; 815) umfasst.

5. Brennstoffpatrone (1) nach einem der Ansprüche 2 bis 4, in welcher die Einrichtung zur Druckbeaufschlagung Einrichtungen (714; 814, 815, 824) umfasst, um den Brennstoff in der Brennstoffpatrone (1) durch Anlegen einer äußeren Kraft mit Druck zu beaufschlagen.

6. Brennstoffpatrone (1) nach einem der vorangegangenen Ansprüche, mit einer die Auslasseinrichtung (1a) der Patrone (1) verschließenden Verschlusseinrichtung (311, 411, 511, 611), die ein reversibles Öffnen und Verschließen der Brennstoffpatrone ermöglicht.

7. Brennstoffpatrone (1) nach einem der vorangegangenen Ansprüche, mit einer Füllstandsanzeige, um einen Brennstofffüllstand der Patrone (1) anzuzeigen.

8. Brennstoffpatrone (1) nach einem der vorangegangenen Ansprüche, mit einer Dosiereinrichtung (617, 618), um einen Brennstofffluss aus der Patrone (1) zu steuern.

9. Brennstoffpatrone (1) nach Anspruch 8, wobei die Dosiereinrichtung eine Pumpeneinrichtung (617) umfasst.

10. Brennstoffpatrone (1) nach Anspruch 9, wobei die Pumpeneinrichtung (617) eine Mikropumpe umfasst.

11. Brennstoffpatrone (1) nach einem der Ansprüche 8 bis 10, wobei die Dosiereinrichtung wenigstens ein betätigbares Ventil umfasst.

12. Brennstoffpatrone (1) nach Anspruch 11, wobei das wenigstens eine Ventil magnetisch oder piezoelektrisch betätigbar ist.

13. Brennstoffpatrone (1) nach Anspruch 11, wobei das wenigstens eine Ventil ein Nadelventil und/oder ein Tellerventil und/oder ein Schiebeventil umfasst.

14. Brennstoffpatrone (1) nach einem der vorangegangenen Ansprüche, zur Verwendung als Nachfüllpatrone zum Befüllen eines Brennstofftanks der Brennstoffzellenvorrrichtung.

15. Brennstoffpatrone (1) nach einem der vorangegangenen Ansprüche, zur Verwendung als Tankkartusche.

16. Brennstoffpatrone (1) nach einem der vorangegangenen Ansprüche mit einer Sicherheitseinrichtung, die bei einem Einsetzvorgang in die Patronenaufnahmevorrichtung (2) und/oder einem Entnahmevorgang aus der Patronenaufnahmevorrichtung (2) beschädigt wird.

17. Patronenaufnahmevorrichtung (2) für eine Brennstoffpatrone (1) nach einem der vorangegangenen Ansprüche, umfassend:
Führungs- und Halterungseinrichtungen (2c) zur Führung und Halterung der Brennstoffpatrone (1);
Öffnungseinrichtungen (2b) zum Öffnen der Brennstoffpatrone (1); und
Brennstoffentnahmeeinrichtungen (2a) zur Brennstoffentnahme aus der Brennstoffpatrone (1).

18. Patronenaufnahmevorrichtung (2) nach Anspruch 17, mit einer Einrichtung (731, 732; 821, 822, 823), um den Brennstoff in einer Brennstoffkammer (1c) der Brennstoffpatrone (1) mit Druck zu beaufschlagen.

19. Patronenaufnahmevorrichtung (2) nach Anspruch 18, in welcher die Einrichtung zur Druckbeaufschlagung ein Gas umfasst.

20. Patronenaufnahmevorrichtung (2) nach einem der Ansprüche 18 und 19, in welcher die Einrichtung zur Druckbeaufschlagung eine Druckfeder (731) umfasst.

21. Patronenaufnahmevorrichtung (2) nach einem der Ansprüche 17 bis 20, in welcher die Brennstoffentnahmeeinrichtungen (2a) eine Dosiereinrichtung (3) umfassen.

22. Patronenaufnahmevorrichtung (2) nach Anspruch 21, wobei die Dosiereinrichtung (3) eine Pumpeneinrichtung umfasst.

23. Patronenaufnahmevorrichtung (2) nach Anspruch 22, wobei die Pumpeneinrichtung eine Mikropumpe umfasst.

24. Patronenaufnahmevorrichtung (2) nach einem der Ansprüche 21 bis 23, wobei die Dosiereinrichtung (3) wenigstens ein betätigbares Ventil (3a) umfasst.

25. Patronenaufnahmevorrichtung (2) nach Anspruch 24, wobei das wenigstens eine Ventil (3a) magnetisch oder piezoelektrisch betätigbar ist.

26. Patronenaufnahmevorrichtung (2) nach Anspruch 25, wobei das wenigstens eine Ventil ein Nadelventil und/oder ein Tellerventil und/oder ein Schiebeventil umfasst.

27. Patronenaufnahmevorrichtung (2) nach einem der Ansprüche 17 bis 26, in welcher die Führungs- und Halterungseinrichtungen (2c) wenigstens ein Einrastelement und/oder wenigstens eine Druckfeder und/oder wenigstens ein Führungsschiene und/oder wenigstens ein Zentrierelement umfassen:

28. Brennstoffzellenvorrichtung mit wenigstens einer Patronenaufnahmevorrichtung (2) gemäß einem der Ansprüche 17 bis 27.
